# EUROPEAN PATENT SPECIFICATION

(11) **EP 2 580 029 B1**
(45) Date of publication and mention of the grant of the patent: **26.11.2014**
(21) Application number: 10722118.6
(22) Date of filing: 08.06.2010
(51) Int. Cl.: B25J 15/04, B25J 19/00

(54) **A TOOL FLANGE FOR AN INDUSTRIAL ROBOT**
WERKZEUGFLANSCH FÜR EINEN INDUSTRIEROBOTER
FLASQUE POUR ROBOT INDUSTRIEL

(43) Date of publication of application: 17.04.2013
(73) Proprietor: ABB Research Ltd., 8050 Zürich (CH)
(72) Inventor: SIRKETT, Daniel, S-722 10 Västerås (SE); LARSSON, Jan, S-724 78 Västerås (SE)
(74) Representative: Savela, Reino Aleksi
(86) International application number: PCT/EP2010/057951
(87) International publication number: WO 2011/154034

(56) References cited:
- EP-A1- 1 364 756
- US-A- 4 635 328
- US-A- 4 636 135
- US-A- 4 917 619

## Description

### TECHNICAL FIELD

The present invention refers to a tool flange according to the preamble of claim 1, arranged for connecting a tool on an arm of an industrial robot, comprising a body having a primary surface adapted to connect to said tool, and a protrusion projecting from said primary surface, and arranged to engage with a recess arranged in said tool to provide rotational alignment between said tool and said flange. Such a tool flange is known from US-A-4917619.

### BACKGROUND ART

Industrial robots often operate with one or many process media connections provided at the tool flange for the purpose of driving a tool, such as a pneumatically actuated vacuum cup or a gripper. Examples of process media are air, gas, liquids or pulverized solid materials. Process media connections may take the form of, e.g. a plastic pneumatic coupling which is installed into the tool flange. The pipe or elongated tube, arranged for distributing the process media to the tool, itself is then, e.g. push-fitted, to the coupling, which transfers the flow media through the tool flange and into the tool attached thereto. When mounting a tool, e.g. a gripper, onto the tool flange, a means for assuring repeatable positional location and rotational location, of the tool relative the tool flange when being mounted onto the tool flange, is a further requirement. This rotational means may take the form of, e.g. a pin, projecting from the tool flange, which engages with a mating hole or slot feature on the mounting face of the tool. The positional means is typically a projecting part mounted on the tool and arranged to engage with a locating surface arranged on the tool flange. Especially, in small industrial robots it is difficult to use the conventional approach to process media connections and tool location since the space occupied by the components, i.e. the rotational and positional means together with tubes or cables, is large in proportion to the total space available. This problem is especially acute when the airline travels internally through the robot arm to the tool flange rather than externally via a so-called "dress-pack", which is routed externally on the robot arm.

US4917619, US4636135 and EP1364756 disclose tool flanges with protrusions for engaging recesses in respective tools.

### SUMMARY OF THE INVENTION

It is an object of the invention to obtain a solution which solves the problem addressed above.

This object is obtained by the tool flange defined in claim 1, with a through-hole within which there is received a tube arranged for distributing process media to the tool. Thereby, since the protrusion is cylindrically shaped, the outer surface of the protrusion provides repeatable rotational location for a tool mounted on the tool flange and the need for a separate rotational alignment pin is thereby eliminated. A further advantage is that the tube, arranged for distributing process media to the tool, can be easily installed. An arrangement as described above provides a simple, compact combined process media connection, rotational alignment and positional alignment, which is integrated into the tool flange. Thus, less space is needed and therefore it is possible to use the solution on tool flanges with limited space available. Another advantage is that such arrangement facilitates internal process media cable routing inside the arm of the industrial robot.

According to a further embodiment of the invention, a sleeve is arranged inside the through-hole and arranged to clamp the tube between the sleeve and the inside wall of said protrusion. Further, the through-hole is arranged with a circumferential barb arranged to retain the tube in an axial position. Thereby, the tube, arranged in the through-hole, will be securely fastened since a wedge effect will take place between the sleeve, the tube and the circumferential barb.

According to a further embodiment of the invention, the outside diameter of the sleeve is greater than the inside diameter of the tube. Thereby, the tube arranged for distributing process media will be securely fastened inside the protrusion.

According to a further embodiment of the invention, the sleeve is made from a non-corrosive material. Thereby water can be used as process media without presenting any difficulties with corrosion, and hence maintenance cost, for replacing the sleeve, will be significantly reduced.

According to a further embodiment of the invention the body has a first end including said primary surface and an opposite end including a secondary surface, and the inside wall of the through-hole arranged in the body, is arranged with a curved edge where it connects to the secondary surface. Thereby, the curved edge provides a smooth transition for the process media tube from lying tangential on the tool flange to emerging perpendicular to the tool flange. Thereby, since the curved edge provides an increased bending radius, the risk of buckling the tube is minimized.

According to a further embodiment of the invention the primary surface comprises means for providing positional alignment between the tool and the tool flange and the protrusion arranged on the tool flange is arranged close to an edge of the primary surface. Thereby, both positional and rotational alignment of the tool is achieved.

### BRIEF DESCRIPTION OF THE DRAWINGS

Other features and advantages of the present invention will become more apparent to a person skilled in the art from the following detailed description in conjunction with the appended drawings in which:
- Fig. 1: shows a perspective front view, seen from above, of a tool flange according to an embodiment of the invention.
- Fig. 2: shows a cross-sectional view, incl. an enlargement view displaying the details of the fastening of the tube, of the tool flange.
- Fig. 3: shows a perspective rear view of the tool
- Fig. 4: shows an industrial robot with a tool flange according to the invention

### DETAILED DESCRIPTION

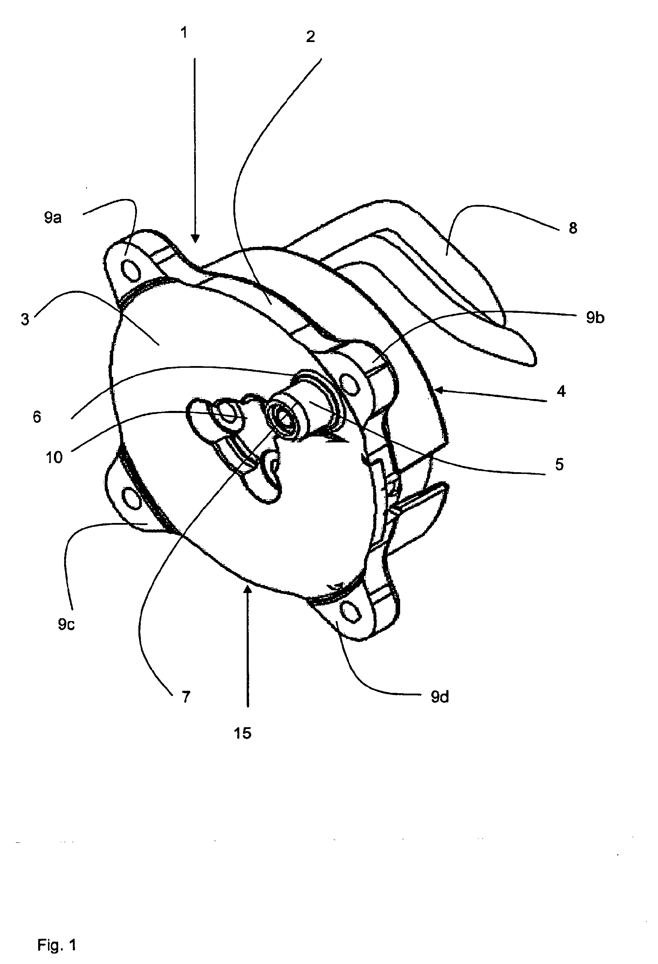

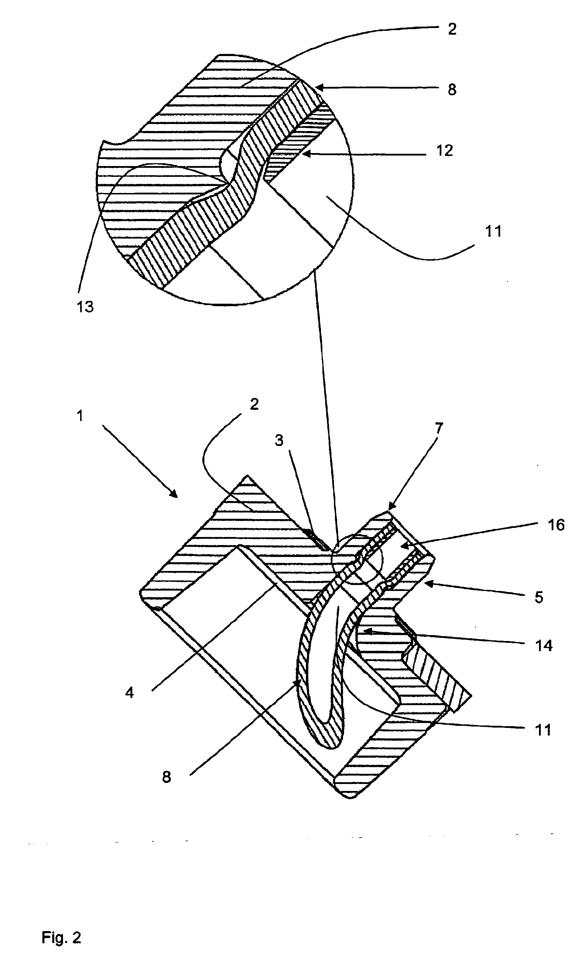

Figure 1 shows a perspective front view of a tool flange 1 and figure 2 (incl. an enlargement view) shows a cross-sectional view of the tool flange 1.
The tool flange 1 comprises a body 2 having a first end including a primary surface 3, adapted to connect with a tool, and an opposite end including a secondary surface 4.
Further, the tool flange 1 comprises a cylindrically shaped protrusion 5 having a first end 6 and a second end 7. The first end 6 is arranged flush against the primary surface 3 of the body 2 of the tool flange 1. The second end 7 is arranged to connect to the tool. The cylindrically shaped protrusion 5 projects from the primary surface 3 of the tool flange 1, and is arranged to engage with a recess arranged in the tool to provide rotational alignment between the tool and the tool flange 1.
The tool flange 1 is provided with a through-hole 11 stretching through the protrusion 5 and the body 2 and adapted to receive a tube 8 arranged for distributing process media, such as compressed air, liquids, gas or pulverized solid materials to the tool. Further the through-hole 11 arranged in the tool flange 1 is connected to a corresponding process media connection arranged on the tool. The protrusion 5 is arranged to connect to the tool and also to distribute process media to the tool. The tube 8 terminates at the end 7 of the through-hole 11 and prior to entering the through-hole 11 the tube 8 is strain-relieved against the tool flangel 1. A tool is attached to the tool flange 1 by means of screws in the four corner lobes 9a-d. The purpose of the screws is to pull the tool against the primary surface 3 of the tool flange 1. Co-linearity with the axis of rotation of the tool flange 1 is assured by means of a cylindrical locating surface 10 which engages with a mating cylindrical protrusion on the tool to provide positional alignment, while the protrusion 5 engages with a radial recess in the tool to provide rotational alignment. The need for a separate rotational alignment pin is thereby eliminated. While the outer surface of the protrusion 5 provides for location of the tool, its inner features provide a secure connection to the tube 8. The protrusion 5 is arranged close to the edge 15 of the primary surface 3 of the tool flange 1 and with a distance from the cylindrical locating surface 10.

The inside wall of the through-hole 11, is arranged with a curved edge 14 where it connects to the secondary surface 4 of the tool flange 1. The curved edge 14 of the entry hole 16 arranged in the tool flange 1, provides a smooth transition for the tube 8 from lying tangential on the tool flange 1 to emerging perpendicular to it, thereby reducing the risk of buckling due to a too-tight bending radius.

Further, especially as shown in figure 2 which shows the details of the tool flange 1, the tube 8, having a first and a second end, is first pushed into the through-hole 11 so that one of its ends is flush against the second end 7 of the protrusion 5. A sleeve 12 is arranged, inside the through-hole 11, to clamp the tube 8 between the sleeve 12 and the inside wall of the protrusion 5. The inside wall of the protrusion 5 is arranged with a circumferential barb 13 arranged to retain the tube 8 in an axial position. Thereby, the tube 8 is compressed against the circumferential barb 13 which tends to bite into its outer surface and resist withdrawal. Resistance to withdrawal is reinforced through the action of a sleeve 12, which is inserted into the bore of the tube 8. Insertion of the sleeve 12 causes the tube 8 to expand. Any attempt to pull the tube 8 backwards through the through-hole 11 therefore tends to drag the enlarged portion towards the circumferential barb 13, thereby causing the connection to be even more secure. In the manner outlined above, secure tube connection and accurate tool location are achieved through the use of just a single additional component, i.e. the sleeve 12. Preferably, the sleeve 12 is made from a non-corrosive material such as brass, copper, aluminium, stainless steel or plastic or polymer.

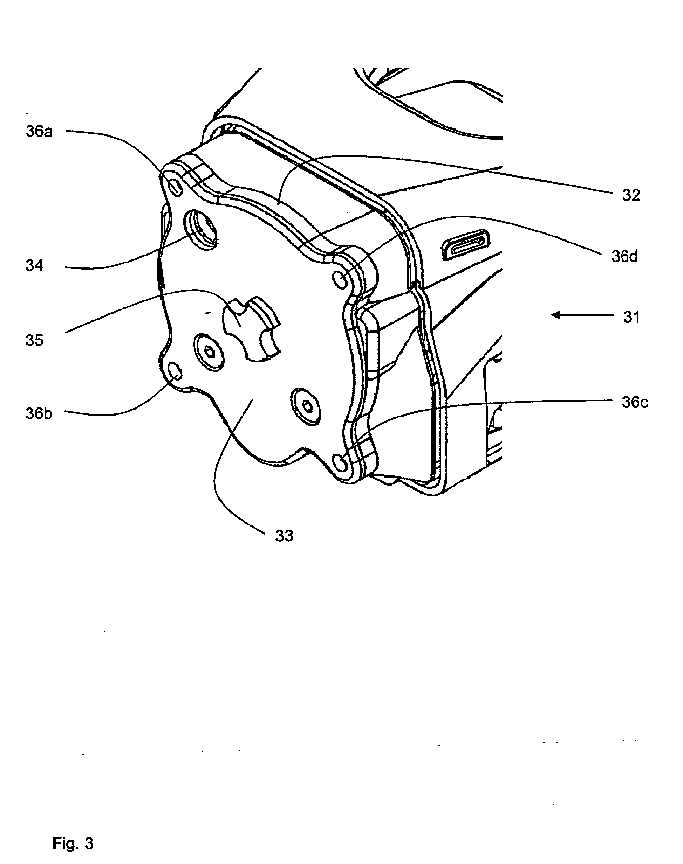

Figure 3 shows a perspective rear view of the tool 31 arranged with a body 32 having a connecting surface 33 adapted to be connected to the tool flange. The connecting surface 33 is arranged with a radial recess 34, a protrusion 35 and corner lobes 36a-d. The recess 34 is arranged to engage with the protrusion arranged on the primary surface of the tool flange and thereby providing rotational alignment of the tool. The protrusion 35 is arranged to engage with the locating surface arranged on the primary surface of the tool flange and thereby providing positional alignment of the tool. The corner lobes 36a-d are arranged to, together with fastening means such as screws, engage with the corner lobes 9a-d arranged on the tool flange to connect the tool 31 with the tool flange and thereby provide a strong connection between the tool 31 and the tool flange.

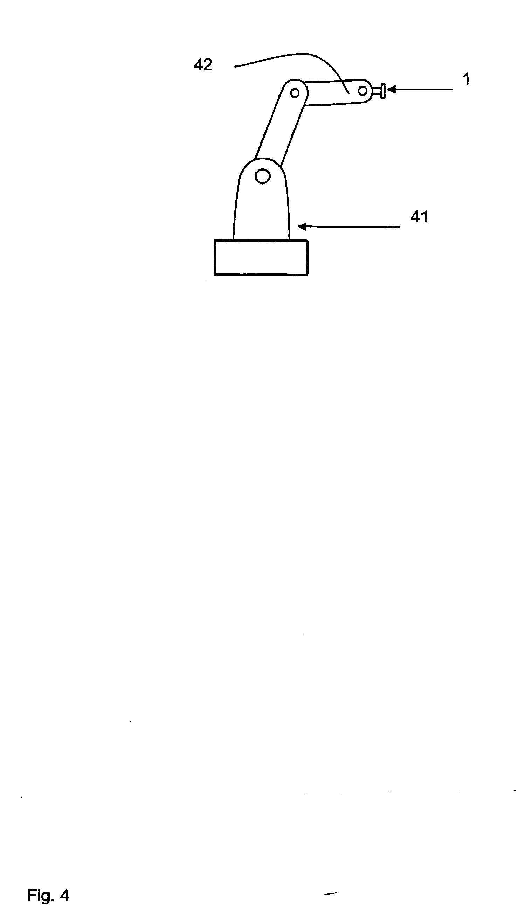

Figure 4 shows an industrial robot 41 with a tool flange 1 according to the invention. The tool flange 1 is arranged on the arm 42 of the industrial robot 41.

The present invention is not limited to the embodiments disclosed but a person skilled in the art may modify it in a plurality of ways within the scope of the invention as defined by the claims.

## Claims

1. A tool flange (1) adapted to be arranged on an arm (42) of an industrial robot (41) for connecting a tool (31) to said arm (42), wherein said tool flange (1) comprises:
- a body (2) having a primary surface (3) adapted to connect to said tool (31), and
- a protrusion (5) projecting from said primary surface (3), and arranged to engage with a recess (34) arranged in said tool (31) to provide rotational alignment between said tool (31) and said tool flange (1),
- said tool flange (1) being provided with-a through-hole (11) stretching through said protrusion (5) and said body (2), said through-hole (11) being connectable to a corresponding process media connection arranged on said tool (31) **characterised in that** within the through-hole (11) there is received a tube (8) arranged for distributing process media to said tool (31).

2. A tool flange (1) according to claim 1, **characterised in that** said protrusion (5) is cylindrical.

3. A tool flange (1) according to claim 1, **characterised in that** a sleeve (12) is arranged inside said through-hole (11) and arranged to clamp said tube (8) between said sleeve (12) and an inside wall of said protrusion (5).

4. A tool flange (1) according to claim 3, **characterised in that** the outside diameter of said sleeve (12) is greater than the inside diameter of said tube (8), arranged for distributing process media to said tool (31).

5. A tool flange (1) according to claims 3 or 4, **characterised in that** said inside wall of the protrusion (5) is arranged with a circumferential barb (13) arranged to retain the tube (8) in an axial position.

6. A tool flange (1) according to claims 3-4, **characterised in that** said sleeve (12) is made from a non-corrosive material.

7. A tool flange (1) according to previous claims, **characterised in that** said body (2) has a first end including said primary surface (3) and an opposite end including a secondary surface (4) and the inside wall of the through-hole
(11), is arranged with a curved edge (14) where it connects to the secondary surface (4).

## Patentansprüche

1. Werkzeugflansch (1), der ausgelegt ist, an einem Arm (42) eines Industrieroboters (41) angeordnet zu werden, um ein Werkzeug (31) mit dem Arm (42) zu verbinden, wobei der Werkzeugflansch (1) Folgendes umfasst:
- einen Körper (2) mit einer primären Oberfläche (3), die ausgelegt ist, mit dem Werkzeug (31) verbunden zu werden, und
- einen Vorsprung (5), der von der primären Oberfläche (3) hervorsteht und angeordnet ist, in eine Aussparung (34) einzugreifen, die in dem Werkzeug (31) angeordnet ist, um eine Drehausrichtung zwischen dem Werkzeug (31) und dem Werkzeugflansch (1) bereitzustellen,
- wobei der Werkzeugflansch (1) mit einem Durchgangsloch (11) bereitgestellt ist, das sich durch den Vorsprung (5) und den Körper (2) erstreckt, wobei das Durchgangsloch (11) mit einer zugehörigen Prozessmedienverbindung verbunden werden kann, die an dem Werkzeug (31) angeordnet ist,
**dadurch gekennzeichnet, dass** in dem Durchgangsloch (11) ein Rohr (8) bereitgestellt ist, das zum Verteilen der Prozessmedien an das Werkzeug (31) angeordnet ist.

2. Werkzeugflansch (1) nach Anspruch 1, **dadurch gekennzeichnet, dass** der Vorsprung (5) zylindrisch ist.

3. Werkzeugflansch (1) nach Anspruch 1, **dadurch gekennzeichnet, dass** eine Hülse (12) im Inneren des Durchgangslochs (11) angeordnet ist und derart angeordnet ist, dass das Rohr (8) zwischen die Hülle (12) und eine Innenwand des Vorsprungs (5) geklemmt wird.

4. Werkzeugflansch (1) nach Anspruch 3, **dadurch gekennzeichnet, dass** der Außendurchmesser der Hülse (12) größer als der Innendurchmesser des Rohrs (8) ist, das zum Verteilen von Prozessmedien an das Werkzeug (31) angeordnet ist.

5. Werkzeugflansch (1) nach Anspruch 3 oder 4, **dadurch gekennzeichnet, dass** die Innenwand des Vorsprungs (5) mit einem Umfangswiderhaken (13) angeordnet ist, der zum Halten des Rohrs (8) in einer axialen Position angeordnet ist.

6. Werkzeugflansch (1) nach Anspruch 3 bis 4, **dadurch gekennzeichnet, dass** die Hülse (12) aus einem nicht korrosiven Material hergestellt ist.

7. Werkzeugflansch (1) nach den vorhergehenden Ansprüchen, **dadurch gekennzeichnet, dass** der Körper (2) ein erstes Ende, das die primäre Oberfläche (3) aufweist, und ein gegenüberliegendes Ende aufweist, das eine sekundäre Oberfläche (4) aufweist, und die Innenwand des Durchgangslochs (11) mit einer gekrümmten Kante (14) angeordnet ist, an welcher sie die sekundäre Oberfläche (4) verbindet.

## Revendications

1. Bride d'outil (1) conçue pour être disposée sur un bras (42) d'un robot industriel (41) en vue du raccordement d'un outil (31) audit bras (42), ladite bride d'outil (1) comprenant :
- un corps (2) comportant une surface principale (3) conçue pour se raccorder audit outil (31), et
- une protubérance (5) faisant saillie à partir de ladite surface principale (3), et conçue pour pénétrer dans une cavité (34) formée dans ledit outil (31) de façon à assurer un alignement en rotation entre ledit outil (31) et ladite bride d'outil (1),
- ladite bride d'outil (1) étant dotée d'un trou traversant (11) s'étendant à travers ladite protubérance (5) et ledit corps (2), ledit trou traversant (11) pouvant être raccordé à un raccord pour substance de traitement correspondant prévu sur ledit outil (31),
**caractérisée en ce qu'**un tube (8), conçu pour distribuer une substance de traitement audit outil (31), est introduit dans ledit trou traversant (11).

2. Bride d'outil (1) selon la revendication 1, **caractérisée en ce que** ladite protubérance (5) est cylindrique.

3. Bride d'outil (1) selon la revendication 1, **caractérisée en ce qu'**un manchon (12) est disposé à l'intérieur dudit trou traversant (11) et conçu pour pincer ledit tube (8) entre ledit manchon (12) et une paroi intérieure de ladite protubérance (5).

4. Bride d'outil (1) selon la revendication 3, **caractérisée en ce que** le diamètre extérieur dudit manchon (12) est supérieur au diamètre intérieur dudit tube (8), conçu pour distribuer une substance de traitement audit outil (31).

5. Bride d'outil (1) selon la revendication 3 ou 4, **caractérisée en ce que** la paroi intérieure de la protubérance (5) est dotée d'une barbelure circonférentielle (13) conçue pour retenir le tube (8) dans une position axiale.

6. Bride d'outil (1) selon les revendications 3 et 4, **caractérisée en ce que** ledit manchon (12) est constitué d'un matériau non corrosif.

7. Bride d'outil (1) selon les revendications précédentes, **caractérisée en ce que** ledit corps (2) comporte une première extrémité comprenant ladite surface principale (3) et une extrémité opposée comprenant une surface secondaire (4), et la paroi intérieure du trou traversant (11) est dotée d'un bord courbe (14) à l'endroit où elle rejoint la surface secondaire (4).
